# EUROPEAN PATENT APPLICATION

(11) **EP 3 587 465 A1**
(43) Date of publication of application: **01.01.2020**
(21) Application number: 18180035.0
(22) Date of filing: 27.06.2018
(51) Int. Cl.: C08G 18/48, C08G 18/76, C08G 18/18, C09K 21/12, C08G 18/42, C08G 101/00

(54) **PROCESS FOR THE PREPARATION OF A POLYURETHANE FOAM**

(71) Applicant: SOLVAY SA, 1120 Brussels (BE)
(72) Inventor: UENVEREN, Ercan, 30457 Hannover (DE); GUTMANN, Sebastian, 30173 Hannover (DE)
(74) Representative: Mross, Stefan P.M.

(57) **Abstract**

The present invention relates to processes for the preparation of a polyurethane foam or a modified polyurethane foam by contacting an A-side composition comprising at least one polyol with a B-side composition comprising at least one isocyanate in the presence of a at least one blowing agent, wherein the at least one blowing agent is provided as a microencapsulated blowing agent, and wherein the polyurethane or modified foam is prepared under spray foaming conditions.

## Description

The present invention relates to processes for the preparation of a polyurethane foam or a modified polyurethane foam by contacting an A-side composition comprising at least one polyol with a B-side composition comprising at least one isocyanate in the presence of a at least one blowing agent, wherein the at least one blowing agent is provided as a microencapsulated blowing agent, and wherein the polyurethane or modified foam is prepared under spray foaming conditions.

Polyurethane foams can be prepared by reacting an appropriate isocyanate with a mixture of isocyanate-reactive compounds, usually polyols, in the presence of a blowing agent. Such foams are often used as thermal insulation medium. DE19935333 discloses polyurethane foams which are blown with microencapsulated blowing agents, in which the cell size of the pores in the polyurethane foam is controlled by selecting a specific particle size of microcapsules. US 8,088,482 B2 concerns thermoexpandable particles that contain hydrocarbon blowing agents and their use on polyurethane rigid foams. Foams according to this disclosure are preferably made by extrusion processes.

Polyurethane foams produced under spray foaming conditions are particularly advantageous for application directly onto the space where insulation is required, e.g. a wall, roof or building assembly. Spray foaming means that A-side and B-side are joined under pressure in a spray nozzle, whereafter the mixture is applied directly to the desired application site. Blowing agents are generally applied in this process, wherein the blowing agents are capable of producing a cellular structure or matrix during the polyurethane foam formation. Control of cell size formation and escape of blowing agent during the process are common challenges in spray foaming. It can be advantageous to achieve closed cells in the sprayed foam in order to achieve additional insulation effect, e.g. when the blowing agent has insulation effect itself, but closed cells can be hard to achieve in some spray foaming conditions.

The present invention now makes available improved processes for the preparation of (modified) polyurethane foams. It is an objective of the present invention to provide a process which makes available a (modified) polyurethane foam with improved and/or controllable properties, which can include improved stability, flammability, thermal insulation properties, processability, and/or cell size. The process can be safer, more economical and/or more ecological due its controllable handling of blowing agent.

This objective and other objectives are achieved by the invention as outlined in the patent claims.

In the frame of the present invention, the singular form is intended also to include the plural. For example, the term "blowing agent" is intended to include mixtures of two or more blowing agents. All aspects and embodiments of the present invention are combinable. In the context of the present invention, the term "comprising" is intended to include the meaning of "consisting of".

One aspect of the present invention concerns a process for the preparation of a polyurethane foam or a modified polyurethane foam by contacting an A-side composition comprising at least one polyol with a B-side composition comprising at least one isocyanate in the presence of a at least one blowing agent, wherein the at least one blowing agent is provided as a microencapsulated blowing agent, and wherein the polyurethane or modified foam is prepared under spray foaming conditions.

Polyurethane foams are generally prepared by contacting two separate compositions. On the one hand, the so-called B-side, which generally consists of isocyanates or mixtures of isocyanates. On the other hand, the so-called A-side comprises all other components used in the production of the foam, notably the polyols or mixtures polyols. This definition of the A-side and the B-side is widely followed in Europe and is also used herein. The A-side usually also comprises the blowing agents, flame retardants, catalysts, surfactants and other auxiliary agents. Spray foaming means that A-side and B-side are joined under pressure in a spray nozzle and afterwards are applied directly onto the space where the insulation is required, e.g. a wall, roof or building assembly.

Blowing agents are chemical compounds which are capable of producing a cellular structure or matrix during the polyurethane foam formation. In the process according to the invention, the at least one blowing agent is provided as a microencapsulated blowing agent. Generally, the amount of microencapsulated blowing agent is from equal to or more than 1 part by weight per 100 parts by weight, and equal to or less than 70 parts by weight per 100 parts by weight based on the weight of the total amount of A- and B-side components including microencapsulated blowing agent being set to 100 parts. Preferably, the amount of microencapsulated blowing agent is from equal to or more than 10 part by weight per 100 parts by weight, and equal to or less than 60 parts by weight per 100 parts by weight, and more preferably, the amount of microencapsulated blowing agent is from equal to or more than 10 part by weight per 100 parts by weight, and equal to or less than 50 parts by weight per 100 parts. The weight of the microencapsulated blowing agent is hereby defined as the sum of the weights of the blowing agent and shell.

The microspheres, which encapsulate the blowing agents in the process according to the present invention, generally have a particle size of from 8 to 90 µm. Particle size, in the context of the present invention, equals mean diameter of the sphere. Where a microsphere is not perfectly spherical, the diameter is measured at the widest portion of the particle. Often, the particle size is equal to or larger than 8, preferably equal to or larger than 12 and most preferably equal to or larger than 17 µm. Often, the particle size is equal to or less than 90, preferably equal to or less than 70 and most preferably equal to or less than 50 µm. The term "particle size" intends to denote the particle size of the microspheres comprising the blowing agent before entering the spray foam process. Depending on the microspheres, the blowing agent and the spray foaming conditions (such as temperature, pressure and time to setting of the foam), the microspheres can also expand during the spray foaming conditions. Values for particle size during or after foaming of four, five or even six times of the original particle size can be obtained when the microspheres expand during the process. The microcapsule can stay intact during the spray foaming process, or can rupture. Generally, it is preferred if the microcapsule stays intact during the spray foaming process, thus not releasing the blowing agent contained in the microcapsule. This not only can have advantages as to avoiding the release of potentially harmful blowing agents, but also in maintaining the insulating properties of blowing agents in the foam cell. Control of cell size and formation is also often enhanced when the microcapsule stays intact during and after the spray foaming process.

Suitable microcapsules comprising blowing agents are known, for example from US 3,615,972, US 4,049,604, US 4,016,110, US 4,582,756, US 5,861,214, US 5,155,138 and EP559254A1. In the process according to the present invention, generally the shell of the microcapsule comprising the blowing agent which can be used in the process according to the invention comprises at least one polymer selected from the group consisting of polyvinylchloride, polyurethane, polypropylene, polyamide, polystyrene, polyvinylidene chloride, polyacrylonitrile, or blends thereof. A preferred polymer mixture for the shell of the microcapsule comprising the blowing agent is polyvinyl chloride/acrylonitrile copolymer. Commercially available microspheres comprising blowing agents include Expancel WU-551, Expancel 461 DU 40, Expancel 920 DU 80, Expancel 093 DU 120 or Expancel DU551, which are available from AkzoNobel; Dualite® M6032AE, which is from Chase Corporation ; Advancell from Sekisui ; Matsumoto Microspheres. The Expancel and Dualite® type beads are both expandable to hollow microspheres consisting of a thin shell of a copolymer of polyvinyl chloride, polystyrene, vinylidene chloride and/or acrylonitrile.

The microspheres preferably are selected such that they are stable in the components that enter the process and under the spray foaming process conditions. Further, the shell, while preferably being able to soften and expand under the spray foaming process conditions, should preferably not melt or rupture during the spray foaming process. In this context, the spray foaming process is considered to be completed when the spray foam is deposited on the target. Preferably, there is no or essentially no loss of blowing agent during the spray foaming process. "Essentially no loss" intends to denote, in this context, that the spray foaming process is not significantly less efficient and/or the levels of blowing agent lost are not detrimental to the product or safety of the process.

The interior of suitable microspheres comprise at least one blowing agent. In one aspect, the at least one blowing agent is an organic blowing agent selected from the group consisting of acetone, ethylacetate, halogen-substituted alkanes, alkenes, cycloalkanes, cycloalkenes and alkanes. Halogen substituted alkanes include methylene chloride, chloroform, ethylidene chloride, vinylidene chloride, monofluorotrichloromethane, chlorodifluoromethane, dichlorodifluoromethane, dichlorodifluoroethane, dichlorotrifluoroethane. Fluorinated alkanes (HFCs) are particularly preferred. Suitable alkanes include propane, cyclopropane, butane, hexane or heptane. Specific examples of blowing agents include: 1,1,1,4,4,4-hexafluorobutane (HFC-356); the tetrafluoroethanes such as 1,1,1,2-tetrafluoroethane (HFC-134a); the pentafluoropropanes such as 1,1,2,2,3-pentafluoropropane (HFC-245ca), 1,1,2,3,3-pentafluoropropane (HFC-245ea), 1,1,1,2,3-pentafluoropropane (HFC-245eb), and 1,1,1,3,3-pentafluoropropane (HFC-245fa); the hexafluoro-propanes such as 1,1,2,2,3,3-hexafluoropropane (HFC-236ca), 1,1,1,2,2,3-hexafluoropropane (HFC-236cb), 1,1,1,2,3,3-hexafluoro-propane (HFC-236ea), 1,1,1,3,3,3-hexafluoropropane (HFC-236fa); the pentafluorobutanes such as 1,1,1,3,3-pentafluorobutane (HFC-365); and difluoroethanes such as 1,1-difluoroethane (HFC-152a). Suitable alkenes are in particular hydrofluoroolefins (HFOs), and include 2,3,3,3-tetrafluoropropene (HFO-1234yf), HFO-1234zr, 1,3,3,3-tetrafluoropropene (HFO-1234ze), 1,2-trans-dichloroethylene and 1-chloro-3,3,3-trifluoropropene (HFO-1233zd), wherein 1,2-trans-dichloroethylene is particularly preferred. In another aspect, cyclopentane, isobutene and isopentane are preferred blowing agents.

In another aspect, the at least one blowing agent is an inorganic blowing agent selected from the group consisting of CO₂, N₂O, or compounds that chemically or thermally release CO₂ or N₂O, such as, for example, NaHCO₃.

In one preferred aspect, the polymer of the microspheres can gradually soften, expanding the volume of the blowing agent, thus expanding the beads into larger microspheres.

The term "polyurethane foam" is intended to denote polymers resulting essentially from the reaction of polyols with isocyanates. These polymers are typically obtained from formulations exhibiting an isocyanate index number from 100 to 180. The term "modified polyurethane foam" is intended to denote polymers resulting from the reaction of polyols with isocyanates that contain, in addition to urethane functional groups, other types of functional groups, in particular triisocyanuric rings formed by trimerization of isocyanates. These modified polyurethanes are normally known as polyisocyanurates (PIR). These polymers are typically obtained from formulations exhibiting an isocyanate index number from 180 to 550.

Preferably, the polyurethane and the modified polyurethane foam is a rigid, closed-cell foam.

Any isocyanate conventionally used to manufacture such foams can be used in the process according to the invention. Mention may be made, for example, of aliphatic isocyanates, such as hexamethylene diisocyanate, and aromatic isocyanates, such as tolylene diisocyanate or diphenylmethane diisocyanate.

Any polyol conventionally used to manufacture such foams can be used in the process according to the invention. The term "polyol" is intended to denote a compound containing more than one hydroxyl group in the structure, e.g. the compound may contain 2, 3, or 4 hydroxyl groups, also preferably 5 or 6 hydroxyl groups, and is intended to comprise a polyol of a single defined chemical structure as well as a mixture of polyols of different chemical structures. Preferred are synthetic polyols. Also preferred are polymeric polyols, more preferably polyester or polyether polyols. Suitable examples for polyester polyols include polycaprolactone diol and diethylene glycol terephthalate. Suitable examples of polyether polyols include polyethylene glycol, e.g. PEG 400, polypropylene glycol and poly(tetramethylene ether) glycol. Also preferred are polyetherpolyols based on carbohydrates, glycerine or amines. Examples for suitable carbohydrate bases include sucrose and sorbitol. Most preferred are brominated polyether glycols, e.g. polyetherpolyol B 350 (CAS-No.: 68441-62-3). Especially suitable is the mixture of polyetherpolyol B 350 and triethyl phosphate, which can be obtained under the brand name IXOL® B 251 from Solvay.

According to one aspect of the present invention, the microencapsulated blowing agent is present exclusively in the A-side. Depending on the reactants and other components, in particular the polyols, present in the A-side, the presence of the microcapsules can be optimally tolerated in view of interaction with the A-side components, such as stability of the microcapsule and viscosity that needs to be handled in the process. The invention further concerns an A-side composition for spray foaming comprising at least one polyol and at least one blowing agent, wherein the at least one blowing agent is provided as a microencapsulated blowing agent, and the use of such a composition in the preparation of a polyurethane foam or a modified polyurethane foam. Additional components and composition is further detailed below.

According to another aspect of the present invention, the microencapsulated blowing agent is present exclusively in the B-side. Depending on the reactants and other components, in particular the isocyanate or mixture of isocyanates, present in the B-side, the presence of the microcapsules can be optimally tolerated in view of interaction with the B-side components, such as stability of the microcapsule and viscosity that needs to be handled in the process. The invention further concerns a B-side composition for spray foaming comprising at least one polyol and at least one blowing agent, wherein the at least one blowing agent is provided as a microencapsulated blowing agent, and the use of such a composition in the preparation of a polyurethane foam or a modified polyurethane foam. Additional components and composition is further detailed below.

In yet another aspect of the present invention the microencapsulated blowing agent is present in the A-side and in the B-side. This can be advantageous to reach the optimal load of microcapsules for obtaining optimal foam characteristics, and/or to keep the overall viscosity of the sides and/or mixture within a processable range.

In the process according to the present invention, the A-side composition often has a viscosity of equal to or more than 900 mPa·s at 25 °C, preferably equal to or more than 950 mPa·s at 25 °C, more preferably equal to or more than 1000 mPa·s at 25 °C. The A-side composition often has a viscosity of equal to or less than 2000 mPa·s at 25 °C, preferably equal to or less than 1500 mPa·s at 25 °C, more preferably equal to or less than 1200 mPa·s at 25 °C. This viscosity relates to the viscosity of the A-side including all components, including, if present, the microencapsulated blowing agent.

In the process according to the present invention, the B-side composition often has a viscosity of equal to or more 900 mPa·s at 25 °C, preferably equal to or more than 950 mPa·s at 25 °C, more preferably equal to or more than 1000 mPa·s at 25 °C. The B-side composition often has a viscosity of equal to or less than 2000 mPa·s at 25 °C, preferably equal to or less than 1500 mPa·s at 25 °C, more preferably equal to or less than 1200 mPa·s at 25 °C. This viscosity relates to the viscosity of the B-side including all components, including, if present, the microencapsulated blowing agent.

According to one aspect, in the process according to the present invention the B-side can comprise a prepolymer formed by a reaction of an isocyanate with a polyol with a %NCO of equal to or less than 25%, preferably from 5% to 20%.

"Viscosity" as used in this invention is intended to denote the dynamic viscosity of a fluid, i.e. its resistance to shearing flows, and is expressed in the unit mPa·s as measured at a temperature of 25 °C. The viscosity is determined according to the standard ISO 3219:1993 "Polymers/resins in the liquid state or as emulsions or dispersions - Determination of viscosity using a rotational viscometer with defined shear rate" and can be measured on a RheolabQC from Anton Paar.

In yet another aspect, the microcapsules enter the isocyanate/polyol mixture during the spray foaming process by means of a fluid composition comprising at least one flame retardant and at least one blowing agent, wherein the at least one blowing agent is provided as a microencapsulated blowing agent. Such as fluid can preferably enter into the process via a third line connected to the spraying nozzle simultaneously during the spray foaming process. The fluid composition comprising at least one flame retardant and at least one blowing agent, wherein the at least one blowing agent is provided as a microencapsulated blowing agent is a further object of the present invention. Any flame retardant conventionally used in the manufacture of such foams can be used. Particularly suitable flame retardants are based on phosphorous esters. Suitable examples include triethylphosphat (TEP), tris(2-chlorisopropyl)phosphate (TCPP), dimethylpropane phosphonate (DMPP), diethylethane phosphonate (DEEP)triethyl phosphate and trischloroisopropyl phosphate. In practice, the amount of flame retardant used generally varies from approximately 0.05 to 50 parts by weight per 100 parts by weight of polyol, preferably 1 to 25, more preferably 10 to 20. Another object of the present invention is the use of such a fluid composition comprising at least one flame retardant and at least one blowing agent, wherein the at least one blowing agent is provided as a microencapsulated blowing agent in the preparation of a polyurethane foam or a modified polyurethane foam.

Optionally, at least one further component selected from a flame retardant, a foam stabilizer, a catalyst, a surfactant and a co-blowing agent can be added to the B-side, both the A- and B-side, or preferably, to the A-side.

The term "co-blowing agent" used in this invention is intended to denote a component comprised in the A-side which can react with the isocyanate of the B-side. It is believed that the energy released from this reaction in form of heat is accelerating the further foam producing process. Preferable chemical co-blowing agents include water, NH₃, primary amines, secondary amines, alcohols, preferably difunctional or trifunctional alcohols; hydroxylamine, and aminoalcohols. Especially preferred are bifunctional or multifunctional amines, glycols or glycerols. Suitable examples include diaminoethane, 1,3-diaminopropane and triethanolamine. In case a co-blowing agent is used, it is preferably used in a range of 1 to 20 wt%, more preferably 2 to 10 wt%, most preferably 3 to 7 wt%, based on the total weight of the A-side.

Suitable catalysts include compounds that catalyse the formation of the -NH-CO-O- urethane bond by reaction between a polyol and an isocyanate or that activate the reaction between an isocyanate and water, such as tertiary amines and organic tin, iron, mercury or lead compounds. Mention may in particular by made, as tertiary amines, of triethylamine, N,N-dimethylcyclohexylamine, N-methylmorpholine, N-ethylmorpholine, dimethylethanolamine, diaza[2.2.2]bicyclooctane (triethylenediamine) and substituted benzylamines, such as N,N-dimethylbenzylamine, and N,N,N',N",N"-pentamethyldiethylenetriamine (PMDTA). Mention may in particular be made, as organic tin or lead compounds, of dibutyltin dilaurate, stannous octanoate and lead octanoate. Other suitable catalysts intended for the manufacture of modified polyurethane (polyisocyanurate) foams include compounds that catalyse the trimerization of isocyanates to triisocyanurates.

In practice, the amount of catalyst used generally varies from approximately 0.05 to 10 parts by weight per 100 parts by weight of polyol. In general, the amount of the composition according to the invention is from 1 to 80 parts by weight per 100 parts by weight of polyol. It is preferably from 10 to 60 parts by weight per 100 parts by weight of polyol.

Any foam stabilizer conventionally used in the manufacture of such foams can be used. Mention may be made, for example, of siloxane polyether copolymers. In practice, the amount of foam stabilizer used generally varies from approximately 0.05 to 10 parts by weight per 100 parts by weight of polyol, preferably 0.5 to 3.0, more preferably 1 to 2.

Any flame retardant conventionally used in the manufacture of such foams can be used. Particularly suitable flame retardants are based on phosphorous esters. Suitable examples include triethylphosphat (TEP), tris(2-chlorisopropyl)phosphate (TCPP), dimethylpropane phosphonate (DMPP), diethylethane phosphonate (DEEP)triethyl phosphate and trischloroisopropyl phosphate. In practice, the amount of flame retardant used generally varies from approximately 0.05 to 50 parts by weight per 100 parts by weight of polyol, preferably 1 to 25, more preferably 10 to 20.

As described above, it is preferred that the polymer of the microspheres can soften, expanding the volume of the blowing agent, thus expanding the beads into larger microspheres. Such expanding is often supported by elevated temperature in the spray foaming process which is a result of the exothermic chemical reactions involved in the formation of the foam, e.g. a result of the reaction of an isocyanate with a polyol. In another aspect, the elevated temperature is supplied by an external energy source, more preferably by pre-heating any or all of the components of the A- or B-side or of the equipment used in the foaming process. "Elevated temperature" is intended to denote a temperature which is above ambient temperature. Suitable temperatures are from 30 to 100 °C, preferably from 40 to 90 °C, more preferably from 50 to 80 °C. In one aspect, the A-side or the B-side, preferably the side not comprising the microcapsules, may be pre-heated before the production of the foam. They may be pre-heated to a temperature of from 25 °C to about 80 °C, preferably from 30 °C to 60 °C, more preferably from 40 to 50 °C. Said pre-heating step may be conducted in the storage tank containing the A- or B-side. It may also be conducted in the lines from the storage tank to the point of mixing the A- and B-side. Said mixing is conventionally conducted using a mixing head. Alternatively, the mixing head itself may be heated to pre-heat the A or B-side immediately before the mixing step. Also, the spray nozzle itself may be heated.

Another object of the present invention is a polyurethane foam or a modified polyurethane foam obtainable by the process. Preferably, the polyurethane foam or modified polyurethane comprises intact microspheres comprising at least one blowing agent. Generally, the amount of microencapsulated blowing agent in the obtained polyurethane or modified polyurethane foam is from equal to or more than 2 parts by weight per 100 parts by weight, and equal to or less than 30 parts by weight per 100 parts by weight based on the weight of the total amount total weight of the foam being set to 100 parts. Preferably, the amount of microencapsulated blowing agent is from equal to or more than 4 part by weight per 100 parts by weight, and equal to or less than 25 parts by weight per 100 parts by weight, and more preferably, the amount of microencapsulated blowing agent is from equal to or more than 5 part by weight per 100 parts by weight, and equal to or less than 20 parts by weight per 100 parts. The weight of the microencapsulated blowing agent is hereby defined as the sum of weights of the blowing agent and shell. Preferably, the foam comprises cells with an average cell size measured according to ASTM D 3576 from 8 µm to 500 µm, preferably from 16 µm to 300 µm. The polyurethane foam or modified polyurethane foam according to the invention is preferably a rigid closed-cell foam.

In the process of the invention, non-flammable handling of flammable blowing agents and processing during spray foaming of polyurethane foams can be achieved. The obtained polyurethane foams display advantageous properties in view of performance, insulation characteristics and safe handling.

Should the disclosure of any patents, patent applications, and publications which are incorporated herein by reference conflict with the description of the present application to the extent that it may render a term unclear, the present description shall take precedence.

The following examples are intended to explain the invention in further detail without wishing to limit.

### Example 1: Spray foaming

A polyurethane foam (spray foam) is prepared by conventional means using the components as shown in the table below. Except the Isocyanate, all components are mixed with the polyol.

| Type | Compound | pbw* |
|---|---|---|
| Polyester polyol | Stepanpol® PS 2412 | 80 |
| Microencapsulated blowing agent | Expancel 920 DU 80 (mixed into polyol) | 20 |
| Flame retardant | TCPP | 38 |
| Surfactant | Tegostab® B8444 | 1.5 |
| Catalyst | PMDETA | 1.5 |
| Isocyanate | Methylendiphenyldiisocyanat (MDI) | 103 |

| | | |
|---|---|---|
| *represents as parts per hundred of polyols by weight | | |

Further examples are performed using, instead of Expancel 920 DU 80, Matsumoto Microsphere® F-36, Matsumoto Microsphere® F-36LV, Dualite® M6032AE, Expancel 909 DU 80 and Expancel 930 DU 120.

### Example 2: Spray foaming

A polyurethane foam (spray foam) is prepared by conventional means using the components as shown in the table below. Except the Isocyanate, all components are mixed with the polyol.

| Type | Compound | pbw* |
|---|---|---|
| Polyol | Lupranol 1200 | 38 |
| Polyol | Jeffol A800 | 25 |
| Microencapsulated blowing agent | Expancel 093 DU 120 (mixed into polyol) | 30 |
| Flame retardant | TCPP | 15 |
| Surfactant | Tegostab® B8444 | 1.5 |
| Catalyst | PMDETA | 1 |
| Isocyanate | Methylendiphenyldiisocyanat (MDI) | 105.8 |

| | | |
|---|---|---|
| *represents as parts per hundred of polyols by weight | | |

Further examples are performed using, instead of Expancel 093 DU 120, Matsumoto Microsphere® F-36, Matsumoto Microsphere® F-36LV, Dualite® M6032AE, Expancel 920 DU 80 and Expancel 930 DU 120.

## Claims

1. A process for the preparation of a polyurethane foam or a modified polyurethane foam by contacting an A-side composition comprising at least one polyol with a B-side composition comprising at least one isocyanate in the presence of a at least one blowing agent, wherein the at least one blowing agent is provided as a microencapsulated blowing agent, and wherein the polyurethane or modified foam is prepared under spray foaming conditions.

2. The process according to claim 1 wherein the amount of microencapsulated blowing agent is from equal to or more than 1 part by weight per 100 parts by weight, and equal to or less than 70 parts by weight per 100 parts by weight based on the weight of the total amount of A- and B-side components including microencapsulated blowing agent being set to 100 parts.

3. The process according to anyone of claims 1 or 2, wherein the blowing agent is an organic blowing agent selected from the group consisting of acetone, ethyl acetate, halogen-substituted alkanes, cycloalkanes, cycloalkenes and alkanes.

4. The process according to claim 3, wherein the blowing agent is selected from propane, cyclopropane, 1,2-trans-dichloroethylene, cyclopentane, isobutene, isopentane and butane.

5. The process according to anyone of claims 1 or 2, wherein the blowing agent is an inorganic blowing agent selected from the group consisting of CO₂, N₂O, or compounds that chemically or thermally release CO₂ or N₂O.

6. The process according to anyone of claims 1 to 5, wherein at least one further component selected from flame retardant, a foam stabilizer, a catalyst, a surfactant and a co-blowing agent is added to the B-side, the A-side or both sides, preferably the A-side.

7. The process according to anyone of claims 1 to 6, wherein the shell of the microcapsule comprising the blowing agent comprises at least one polymer selected from the group consisting of polyvinylchloride, polyethylene, polyurethane, polypropylene, polyamide, polystyrene, polyvinylidene chloride, polyacrylonitrile, or blends thereof.

8. The process according to any one of claims 1 to 7 wherein the A-side composition has a viscosity of equal to or more than 900 mPa·s at 25 °C, preferably equal to or more than 950 mPa·s at 25 °C, more preferably equal to or more than 1000 mPa·s at 25 °C and a viscosity of equal to or less than 2000 mPa·s at 25 °C, preferably equal to or less than 1500 mPa·s at 25 °C, more preferably equal to or less than 1200 mPa·s at 25 °C.

9. The process according to any one of claims 1 to 8 wherein the B-side composition has a viscosity of equal to or more than 900 mPa·s at 25 °C, preferably equal to or more than 950 mPa·s at 25 °C, more preferably equal to or more than 1000 mPa·s at 25 °C and a viscosity of equal to or less than 2000 mPa·s at 25 °C, preferably equal to or less than 1500 mPa·s at 25 °C, more preferably equal to or less than 1200 mPa·s at 25 °C

10. The process according to any one of claims 1 to 9 wherein the B-side comprises a prepolymer formed by a reaction of an isocyanate with a polyol with a %NCO of equal to or less than 25%, preferably from 5% to 20%.

11. The process according to any one of claims 1 to 10 wherein the microcapsule comprising the blowing agent has an average particle size of from equal to or more than 8 µm to equal to or less than 90 µm before entering the process.

12. A polyurethane foam or a modified polyurethane foam obtainable by the process of any one of claims 1 to 11.

13. An A-side composition for spray foaming comprising at least one polyol and at least one blowing agent, wherein the at least one blowing agent is provided as a microencapsulated blowing agent.

14. A B-side composition for spray foaming comprising at least one isocyanate and at least one blowing agent, wherein the at least one blowing agent is provided as a microencapsulated blowing agent.

15. A fluid composition comprising at least one flame retardant and / or activator and at least one blowing agent, wherein the at least one blowing agent is provided as a microencapsulated blowing agent.
